# EUROPÄISCHE PATENTSCHRIFT

(11) **EP 2 138 915 B1**
(45) Veröffentlichungstag und Bekanntmachung des Hinweises auf die Patenterteilung: **25.06.2014**
(21) Anmeldenummer: 09161256.4
(22) Anmeldetag: 27.05.2009
(51) Int. Cl.: G05B 19/042

(54) **Mobiles programmierbares Steuergerät**
Mobile programmable control device
Dispositif de commande programmable et mobile

(30) Priorität: 25.06.2008 DE 102008030085
(43) Veröffentlichungstag der Anmeldung: 30.12.2009
(73) Patentinhaber: Siemens Aktiengesellschaft, 80333 München (DE)
(72) Erfinder: Meixner, Josef, 91052 Erlangen (DE); Schertl, Andreas, 92249 Vilseck (DE)

(56) Entgegenhaltungen:
- US-A1- 2007 106 765
- US-A1- 2007 109 116
- JILL GAMBON: "How to Link PLCs and RFID" RFID JOURNAL,, [Online] 28. April 2008 (2008-04-28), Seite 4PP, XP009139898 Gefunden im Internet: URL:http://www.rfidjournal.com/article/pri nt/4044> [gefunden am 2010-10-12]

## Beschreibung

Die Erfindung betrifft mobile programmierbare Steuergeräte, ein Programmiergerät zur Programmierung dieser Steuergeräte, sowie ein System, umfassend ein mobiles programmierbares Steuergerät und einen Sensor.

Zur Automatisierung und Steuerung technologischer Prozesse im industriellen Umfeld (z.B. Leiterplattenfertigung, Steuerung einer Gepäckförderanlage, Automobilproduktion) werden eine Vielzahl von Komponenten eingesetzt, wie z.B. Antriebe, Sensoren, Stellglieder, speicherprogrammierbare Steuerungen (SPS). Aber auch RFID-Reader und RFID-Tags (Transponder) finden in der Automatisierungstechnik Verwendung.

Die internationale Patentanmeldung WO 2007/059184 A2 offenbart die integrative Kopplung von RFID-Tag Daten mit speicherprogrammierbaren Steuerungen (SPS, PLC).

Die Patentschrift US 7,339,476 B2 offenbart Systeme und Methoden zur Integration von RFID-Technologie mit industriellen Steuerungen.

Die US Patentanmeldung US2007/0106765A1 offenbart eine Methode, ein Gerät und ein System zum Empfangen von Service-Daten auf einem Computer von einem RFID Transponder.

Die Integration von speicherprogrammierbaren Steuerungen (SPC) mit RFID-Transpondern zur Steuerung technologischer Prozesse ist aber noch nicht optimal.

Die Aufgabe der vorliegenden Erfindung ist es, ein mobiles programmierbares Steuergerät und ein dazu passendes Programmiergerät zur Verfügung zu stellen, welche eine verbesserte Integration von speicherprogrammierbaren Steuerungen (SPS) und RFID-Transpondern bereitstellen.

Diese Aufgabe wird gelöst durch ein mobiles programmierbares Steuergerät, welches funktional die klassischen Aufgaben einer speicherprogrammierbaren Steuerung und eines RFID-Transponders in sich vereinigt Das mobile programmierbare Steuergerät umfasst:
- eine Spannungsversorgung durch Batterie, Akku oder Netzteil;
- eine Schnittstelle zur Ein- und/oder Ausgabe von Daten;
- Mittel zum Laden von Anwenderprogrammen von einem Programmiergerät oder einem Engineeringsystem;
wobei die speicherprogrammierbare Steuerung einen Prozessor, ein Betriebssystem und ein Laufzeitsystem zur Ausführung des Anwenderprogramms umfasst;
dadurch gekennzeichnet, dass der RFID-Transponder mit dem Prozessor, dem Betriebssystem und dem Laufzeitsystem zur Ausführung der Anwenderprogramme operativ verbunden ist, wobei die Anwenderprogramme Anweisungen zur Abarbeitung von Funktionen der speicherprogrammierbaren Steuerung und gleichzeitig Anweisungen zur Abarbeitung von Funktionen auf dem Mikroprozessor des RFID-Transponders enthält.

Das erfindungsgemäße Steuergerät bündelt somit die Eigenschaften einer speicherprogrammierbaren Steuerung (SPS, PLC) und eines aktiven RFID-Transponders (Tag) in einem Gerät. Die Programmier- und Konfigurationsmittel für speicherprogrammierbare Steuerungen können somit auch für die Programmierung der RFID-Transponder verwendet werden. Personal, welches mit dem zugrundeliegendem technischen Prozess und mit der Programmierung von speicherprogrammierbaren Steuerungen vertraut ist, kann somit auch für die Programmierung der RFID-Transponder eingesetzt werden, ohne mit dem üblicherweise einzusetzenden Paradigmen der software-orientierten Programmierung für RFID-Transponder vertraut sein zu müssen. Ein zusätzlicher Softwareentwickler zur Programmierung des RFID-Transponders ist deshalb nicht erforderlich. Die Automatisierung eines technischen Prozesses ist somit von einer Person mit Kenntnis von SPS Programmierung und Werkzeugen durchführbar. Weiterhin reicht im Steuergerät ein gemeinsames Laufzeitsystem aus, um die Funktionalitäten von SPS und RFID-Transponder abzuarbeiten. Dies ist vorteilhaft für die Herstellung, Konfigurierung, Auslieferung und Wartung des Steuergerätes. Das mobile Steuergerät ist leicht zu handhaben und an stationären oder auch an mobilen Objekten (z.B. fahrerloses Transportsystem, Fördercontainer, Werkzeuge) anbringbar, wodurch diese mobilen Objekte mit eigener Verarbeitungsintelligenz und eigenem Bearbeitungszustand (Daten) versehen werden können. Das erfindungsgemäße Steuergerät bietet somit die hardware- und softwaretechnische Vereinigung der Eigenschaften einer SPS und eines aktiven RFID-Tags.

Eine erste vorteilhafte Ausgestaltung der vorliegenden Erfindung besteht darin, dass das Anwenderprogramm mit einer Entwicklungsumgebung erstellt wird, die für die Programmierung von speicherprogrammierbaren Steuerungen geeignet ist. Anwenderprogramme für RFID-Transponder werden üblicherweise in einer konventionellen Mikrocontroller-Entwicklungsumgebung programmiert, entsprechend dem Mikrocontroller auf dem Transponder. Wenn der Mikrocontroller auf dem Transponder mit einer entsprechenden Laufzeitumgebung ausgestattet ist, können Mittel zur Programmierung von speicherprogrammierbaren Steuerungen, wie Funktionsplan, Anweisungsliste, Kontaktplan usw. zur Programmierung des Chips auf dem aktiven RFID-Transponder verwendet werden. Mit den technologischen Prozessen vertraute SPS-Programmierer können somit auch die Programmierung der aktiven RFID-Transponder vornehmen. Es erfolgt somit eine Programmierung des Steuergerätes aus "einer" Hand und einem Werkzeug.

Eine weitere vorteilhafte Ausgestaltung der vorliegenden Erfindung besteht darin, dass die Schnittstelle zur Ein-und/oder Ausgabe von Daten mit Sensoren und/oder Aktoren und/oder Tasten und/oder LEDs und/oder einem Display zur Kommunikation mit dem technologischen Prozess oder mit einer darin arbeitenden Betriebsperson verbunden ist und dieser technologische Prozess durch die Ein- und/oder Ausgabe der Daten wahrgenommen und/oder gesteuert wird. Das erfindungsgemäße Steuergerät verfügt somit über die Funktionalität einer speicherprogrammierbaren Steuerung und kann somit eine "reine" SPS ersetzen. Dies ergibt Vorteile bei der Herstellung (economies of scale). Die Batterie und die Funkverbindung erlauben ein breiteres und flexibleres Einsatzspektrum als bei "reinen stationären" SPS.

Eine weitere vorteilhafte Ausgestaltung der vorliegenden Erfindung besteht darin, dass der RFID-Transponder über die Schnittstelle zur Ein- und/oder Ausgabe von Daten mit Sensoren und/oder Aktoren und/oder Tasten und/oder LEDs und/oder Displays eines technologischen Prozesses und/oder seinen Operatoren operativ verbunden ist. Einfache RFID-Transponder besitzen nicht die Möglichkeit Aktoren oder Sensoren zur Steuerung von technischen Prozessen anzuschließen. Durch die Integration von RFID-Transpondern in das erfindungsgemäße Steuergerät können auch Aktoren oder Sensoren oder einfache HMI Elemente durch den integrierten Transponder angeschlossen bzw. über die Anwenderprogramme angesprochen und berücksichtigt werden. Dies kann entweder wireless (z.B. über Funk, Infrarot) oder über eine feste Verdrahtung realisiert werden.

Beispiel: In der Gepäckförderanlage eines Flughafens kann sich durch das vorgestellte Verfahren ein Koffer merken, ob er bereits "durchleuchtet" wurde. Er erhält diese Information über einen Reader/Writer beim passieren der Durchleuchtungsanlage, und zeigt dies etwa durch eine grüne LED oder eine Ziffer am Koffer/Steuergerät an. Die betrieblichen Prozesse können es aber erfordern dass dieser Zustand vor Ort durch das Handhabungspersonal wieder gelöscht werden kann. Dies kann mittels einer Taste am Steuergerät/Koffer erfolgen. Solche oder ähnliche Logiken (z.B. zur Behandlung von unterschiedlichen Prioritäten bei Koffern) können im erfindungsgemäßen Steuergerät programmiert und abgearbeitet werden.

Eine weitere vorteilhafte Ausgestaltung der vorliegenden Erfindung besteht darin, dass die Anwenderprogramme wie bei einer SPS zyklisch abgearbeitet werden. Das Steuergerät ermöglicht somit nicht nur die volle Substitution der Arbeitsweise einer speicherprogrammierbaren Steuerung, sondern bietet auch eine bessere Einbringung und Erweiterung der Arbeitsweise des RFID-Transponders, bei dem üblicherweise Anwenderprogramme getriggert von Ereignissen bzw. "frei" programmiert ausgeführt wird.

Das mobile Steuergerät besitzt die gleiche Laufzeitumgebung wie eine SPS und ist somit in der Lage, Anwenderprogramme nach einer genormten SPS-Sprache (IEC 61131) auszuführen. Das heißt, das Anwenderprogramm wird auch auf dem Steuergerät zyklisch abgearbeitet und passt sich an den Zyklus der integrierten SPS an. Die Zyklen von Steuergerät und integrierter SPS laufen damit synchron und besitzen exakt die gleiche Zykluszeit. Dadurch, dass das Anwenderprogramm für das erfindungsgemäße Steuergerät durch eine SPS-Sprache erstellbar ist, wird für die Programmierung des Mikroprozessors des RFID-Transponders kein zusätzlicher Softwareentwickler benötigt. Das erfindungsgemäße Steuergerät bietet die hardware- und softwaretechnische Vereinigung der Eigenschaften einer SPS und eines aktiven RFID-Transponders.

Eine weitere vorteilhafte Ausgestaltung der vorliegenden Erfindung besteht darin, dass das Anwenderprogramm mit einer Entwicklungsumgebung erstellt wird, die für die Programmierung von speicherprogrammierbaren Steuerungen geeignet ist. Für die Programmierung des Anwenderprogrammes des RFID-Transponders ist somit keine zusätzliche Programmier- oder Entwicklungsumgebung erforderlich. Mit einer Programmier- oder Entwicklungsumgebung können die SPS und der RFID-Transponder des Steuergeräts programmiert werden. Dies erleichtert die Erstellung von Anwenderprogrammen im Bereich der Automatisierung technologischer Prozesse.

Eine weitere vorteilhafte Ausgestaltung der vorliegenden Erfindung besteht darin, dass der RFID-Transponder über eine Ein-/Ausgabeeinheit der speicherprogrammierbaren Steuerung mit Sensoren und/oder Aktoren des technologischen Prozesses operativ koppelbar ist. RFID-Transponder besitzen üblicherweise nicht die Möglichkeit Aktoren oder Sensoren zur Steuerung von technischen Prozessen anzuschließen. Durch die Integration von RFID-Transpondern in das erfindungsgemäße Steuergerät können auch Aktoren oder Sensoren durch den integrierten RFID-Transponder angeschlossen bzw. angesprochen werden. Dies kann entweder wireless (z.B. über Funk, Infrarot) oder über eine feste Verdrahtung realisiert werden.

Eine weitere vorteilhafte Ausgestaltung der vorliegenden Erfindung besteht darin, dass das Steuergerät an einem mobilen Objekt befestigbar ist, und dass das mobile Objekt dadurch ertüchtigt ist, im Sinne des objektorientierten Paradigmas als aktives Objekt zu wirken. Das mobile Steuergerät besitzt eine robuste und kleine Bauweise und ist dadurch an Objekten, insbesondere mobilen Objekten, leicht anbringbar (z.B. durch Schraub-, Steck- oder Klebeverbindungen). Dadurch können mobile Objekte (z.B. Gepäckstücke, Container, fahrerlose Transportsysteme) mit einer lokalen Intelligenz (Mikroprozessor des RFID-Transponders) versehen werden. Den mobilen Objekten kann somit Zustands- und Verhaltensinformation zugeordnet werden, welche im Betrieb abgefragt werden können. Durch die gewählte Art der Verbindung können Steuergerät und mobiles Objekt permanent, temporär oder betriebsabhängig miteinander verbunden sein. Dadurch kann z.B. auch eine grosse Anzahl (z.B. 10000) von umlaufenden Behältern durch eine relativ geringe Anzahl von mobilen Steuergeräten (z.B. 100) repräsentiert werden, die dann an einem Behälter angebracht werden, wenn der Behälter im eigenen betrieblichen Bereich entgegengenommen wird und wieder entfern werden, wenn er den betrieblichen Bereich verlässt.

Eine weitere vorteilhafte Ausgestaltung der vorliegenden Erfindung besteht darin, dass für das Verbinden des Steuergerätes mit einem Objekt und für das Trennen des Steuergerätes mit dem Objekt jeweils dedizierte Anwenderprogrammzyklen vorgesehen sind. Das erfindungsgemäße Steuergerät kann temporär mit einem Objekt, z.B. einem mobilen Objekt physikalisch verbunden sein (z.B. durch Schraub-, Steck- oder Klebeverbindungen). Durch dedizierte Anwenderprogrammroutinen bzw. Anwenderprogrammzyklen, die beim Verbinden oder Trennen durchlaufen werden, wird das kontrollierte und definierte Anbringen und Entfernen des Steuergeräts am Objekt und die vom Programmierer definierte Reaktion darauf sichergestellt.

Die Aufgabe wird weiterhin gelöst durch ein Programmiergerät für das erfindungsgemäße Steuergerät, das Programmiergerät umfassend:
- Eingabemittel zur Eingabe von Benutzerbefehlen für Anwenderprogramme für das Steuergerät;
- Ausgabemittel zur Darstellung editierter Anwenderprogramme und von Prozessdaten einzelner oder verschalteter Steuergeräte;
- einer auf einem Prozessor des Programmiergerätes ablaufenden Programmiersoftware zum Umsetzen der eingegebenen Benutzerbefehle zum Erstellen der Anwenderprogramme, wobei das erstellte Anwenderprogramm gleichzeitig Anweisungen zur Abarbeitung von Funktionen einer speicherprogrammierbaren Steuerung und zur Abarbeitung von Funktionalität eines Mikroprozessors eines RFID-Transponders enthält. Das Programmiergerät ermöglicht die Erstellung von Anwenderprogrammen für das Steuergerät, die sowohl von der SPS als auch vom Mikroprozessor des RFID-Transponders ausführbar sind. Es ist somit nur ein Programmierwerkzeug nötig. Weiterhin wird die Verwendung nur eines Mittels zur Programmierung die Datendurchgängigkeit zwischen SPS und RFID-Transponder sowie die Datendurchgängigkeit und Prozessintegration des erfindungsgemäßen Steuergeräten mit anderen, etablierten Automatisierungsgeräten sehr einfach sichergestellt.

Eine weitere vorteilhafte Ausgestaltung der vorliegenden Erfindung besteht darin, dass die Anwenderprogramme in einer genormten Sprache, insbesondere nach IEC 61131, für speicherprogrammierte Steuerungen erstellt sind. Programmierwerkzeuge für speicherprogrammierbare Steuerungen, die die internationale Norm IEC 61131 unterstützen, sind weit verbreitet und werden von vielen Herstellern angeboten. Bei der Programmierung des erfindungsgemäßen Steuergeräts ist man somit nicht auf proprietäre Programmierwerkzeuge beschränkt oder angewiesen.

Eine weitere vorteilhafte Ausgestaltung der vorliegenden Erfindung besteht darin, dass die Anwenderprogramme als Kontaktplan, als Funktionsplan, als Anweisungsliste, als Ablaufsprache, als strukturierter Text oder als Continuous Function Chart realisierbar sind. Die Programmiersprachen bzw. -mittel nach IEC 61131 werden von vielen Automatisierungsfachleuten beherrscht. Für die Programmierung des erfindungsgemäßen Steuergeräts sind somit keine aufwändigen zusätzlichen Schulungen erforderlich. Auch der Mikroprozessor des RFID-Tags kann nach IEC 61131 programmiert werden und erfordert keine extra Programmierumgebung, die weitere zusätzliche softwaretechnische Konzepte unterstützt.

Die Aufgabe wird weiterhin gelöst durch ein System, umfassend das erfindungsgemäße mobile Steuergerät und einen Sensor zur Bestimmung, ob das Steuergerät sich an einem (mobilen oder stationären) Objekt befindet oder ob es "allein" ist. Wenn der Sensor erkennt, dass sich das mobile Steuergerät nicht mehr am Objekt befindet, wird automatisch der Anwenderprogrammzyklus zum ordnungsgemäßen und definierten Entfernen des Steuergeräts gestartet. Damit befindet sich das Steuergerät auch nach Entfernung vom Objekt in einem definierten vom Programmierer festlegbaren Zustand.

Wenn der Sensor erkennt, dass sich das mobile Steuergerät (wieder) am Objekt befindet, wird automatisch der Anwenderprogrammzyklus zum ordnungsgemäßen und definierten Verbinden des Steuergeräts gestartet. Damit befindet sich das Steuergerät auch nach Verbinden mit dem Objekt in einem definierten vom Programmierer festlegbaren Zustand.

Ein Ausführungsbeispiel der Erfindung ist in der Zeichnung dargestellt und wird im Folgenden erläutert.

Dabei zeigen:
- FIG 1: ein schematisches Übersichtbild eines RFID-Systems, gekoppelt an ein Datenverarbeitungssystem,
- FIG 2: eine schematische Darstellung des erfindungsgemäßen mobilen, programmierbaren Steuergerätes, und
- FIG 3: ein Ausführungsbeispiel für den Einsatz des erfindungsgemäßen Steuergerätes in einem technologischen Prozess.

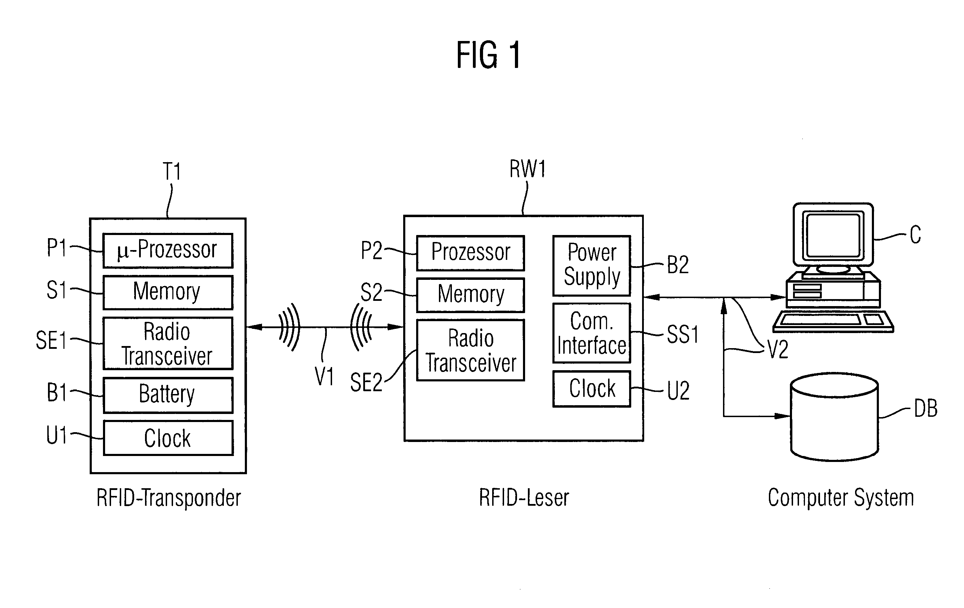

FIG 1 zeigt ein schematisches Übersichtsbild eines RFID-Systems, gekoppelt an ein Datenverarbeitungssystem. Das RFID-System in Figur 1 besteht aus einem RFID-Transponder (Tag) T1 mit eine Mikroprozessor P1, einem Speicher S1, einer Sende-und Empfangseinheit SE1, einer Batterie B1 sowie einer Taktuhr U1 und aus einem RFID-Leser RW1 mit einem Prozessor P2, einem Speicher S2, einer Sende- und Empfangseinheit SE2, einer Batterie oder Spannungsversorgung B2, einem Kommunikationsinterface SS1 und einer Taktuhr U2 (Real time clock). Über die Funkverbindung V1 kommuniziert der RFID-Leser RW1 mit dem RFID-Transponder T1. Über die Kommunikationsschnittstelle SS1 und der Verbindung V2 kommuniziert der RFID-Leser RW1 mit dem Computersystem bestehend aus einem Computer C und einer Datenbank DB. Gemäß dem Stand der Technik kann es sich beim Computer C und der Datenbank DB auch um eine herkömmliche SPS mit angeschlossenem SCADA-, Prozessdaten- oder MES-System (Manufacturing Execution System) handeln. Der RFID-Transponder T1 ist als aktiver Transponder ausgebildet, das heißt er besitzt eine Verarbeitungseinheit P1 und eine eigenständige Stromversorgung B1 sowie einen Takt U1. Die Anwenderprogramme für den RFID-Transponder T1 und den RFID-Leser RW1 werden in einer konventionellen Mikrocontroller-Entwicklungsumgebung programmiert. Neben den klassischen Automatisierungs-komponenten wie speicherprogrammierbare Steuerungen finden RFID-Systeme immer mehr Einzug in die Steuerung von technologischen Prozessen.

Die Funkverbindung V1 zwischen dem RFID-Transponder T1 und dem RFID-Leser RW1 ist beidseitig über Antennen realisiert. Der Mikroprozessor P1 des Transponders T1 kann komplex ausgebildet sein und eine von-Neumann-Architektur aufweisen. Solche RFID-Transponder T1 sind typischerweise von ihrer Bauform her klein, an die Einsatzbedingungen angepasst und stromsparend ausgeführt. Sie können auch für anspruchsvolle Automatisierungsaufgaben eingesetzt werden.

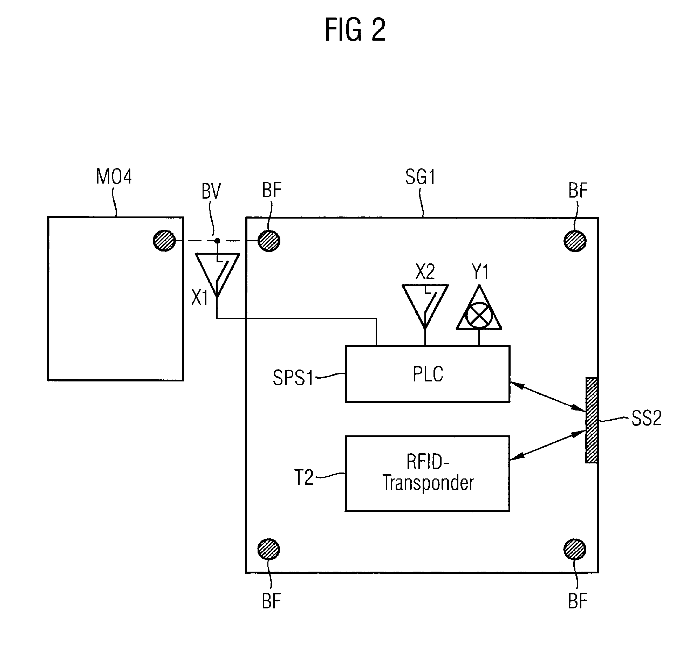

Figur 2 zeigt eine schematische Darstellung des erfindungsgemäßen mobilen programmierbaren Steuergerätes SG1. RFID-Transponder T1, T2 werden überwiegend zur Identifikation und zur Nachverfolgung von Gütern eingesetzt, jedoch können sie auch zunehmend als Plattform für Laufzeitumgebungen, um Anwenderprogramme auszuführen, eingesetzt werden, insbesondere bei vorhanden sein eines entsprechendem Mikroprozessors P1. Bisher werden Automatisierungskomponenten wie speicherprogrammierbare Steuerungen oder RFID-Systeme separat programmiert. Eine speicherprogrammierbare Steuerung SPS1 wird nach einer genormten SPS-Sprache programmiert, ein aktiver RFID-Transponder mit einer klassischen Programmiersprache, abhängig von dem auf dem RFID-Transponder T2 verbauten Mikrocontroller. Damit verbunden sind unterschiedliche Laufzeitumgebungen zur Ausführung der jeweiligen Anwenderprogramme. Während das Anwenderprogramm auf einer speicherprogrammierbaren Steuerung zyklisch abgearbeitet wird, wird es hingegen auf einem aktiven RFID-Transponder frei ausgeführt, das heißt getriggert von Ereignissen. Der Nachteil dieser Vorgehensweise ist ersichtlich: Es sind verschiedene Programmierkenntnisse notwendig sowie die Definition einer Schnittstelle, um die Kommunikation zwischen speicherprogrammierbarer Steuerung und aktivem RFID-Transponder zu gewährleisten. Folglich ist es sehr schwierig bis nahezu unmöglich die Automatisierung eines solchen technologischen Prozesses von einer einzigen Person durchführen zu lassen. Dies würde unweigerlich zu vielen Nacharbeiten wie z.B. projektspezifischen Schnittstellen etc. führen. Zudem sind verschiedene Werkzeuge für die Programmierung notwendig, was eine fehlende Datendurchgängigkeit nach sich zieht. Die separate Programmierung erzeugt somit einen erheblichen Mehraufwand.

Zur Lösung der beschriebenen Problematik wird die Bündelung der Eigenschaften einer speicherprogrammierbaren Steuerung SPS1 und eines aktiven RFID-Transponders T2 in einem mobilen programmierbaren Gerät SG1 vorgeschlagen. Das bedeutet konkret, dass sowohl die SPS als auch der RFID-Transponder mit einer genormten SPS-Sprache programmierbar sind und somit auch die gleiche Laufzeitumgebung zum Ausführen von Anwenderprogrammen besitzen.

Eine speicherprogrammierbare Steuerung ist durch folgende Eigenschaften charakterisiert:
- Zyklusorientiert, das heißt das Anwenderprogramm wird zyklisch abgearbeitet,
- programmierbar nach einer genormten Sprache, typischerweise IEC 61131,
- fest verdrahtet und eingebaut im Schaltschrank,
- Ein- und Ausgänge.

Aktive RFID-Transponder sind durch folgende Eigenschaften charakterisiert:
- Funkbasiert,
- programmierbar abhängig vom vorhandenen Mikrocontroller,
- mobil,
- robuste und kleine Bauweise.

Die Vereinigung dieser Merkmale zu einem mobilen programmierbaren Steuergerät SG1 bietet folgende vorteilhafte Attribute und Eigenschaften:
- Zyklusorientiert, das heißt das Anwenderprogramm wird zyklisch abgearbeitet,
- programmierbar nach einer genormten SPS-Sprache, typischerweise IEC 61131,
- funkbasiert,
- mobil und beweglich,
- robuste und kleine Bauweise,
- eventuelle Anschlussmöglichkeiten für funkbasierte oder fest verdrahtete Ein- und Ausgänge

Die Software- und Hardwaretechnische Vereinigung der Eigenschaften einer speicherprogrammierbaren Steuerung SPS1 und eines aktiven RFID-Transponders T2 bieten somit folgende Vorteile:

Für die Programmierung des Steuergerätes SG1 sind keine unterschiedlichen Programmierkenntnisse mehr erforderlich. Beide Geräte können somit von der gleichen Person programmiert werden. Sowohl die speicherprogrammierbare Steuerung SPS1 als auch der RFID-Transponder T2, das heißt somit das Steuergerät SG1, werden mit einer genormten SPS-Sprache, typischerweise IEC 61131 (Funktionsplan, Anweisungsliste, Kontaktplan, strukturierter Text) programmiert. Die Norm IEC 61131 befasst sich mit den Grundlagen speicherprogrammierbarer Steuerungen (SPS), wobei der dritte Teil dieser Norm die fünf Programmiersprachen definiert mit denen eine speicherprogrammierbare Steuerung programmiert werden kann: Anweisungsliste, Kontaktplan, Funktionsbausteinsprache, Ablaufsprache und strukturierter Text.

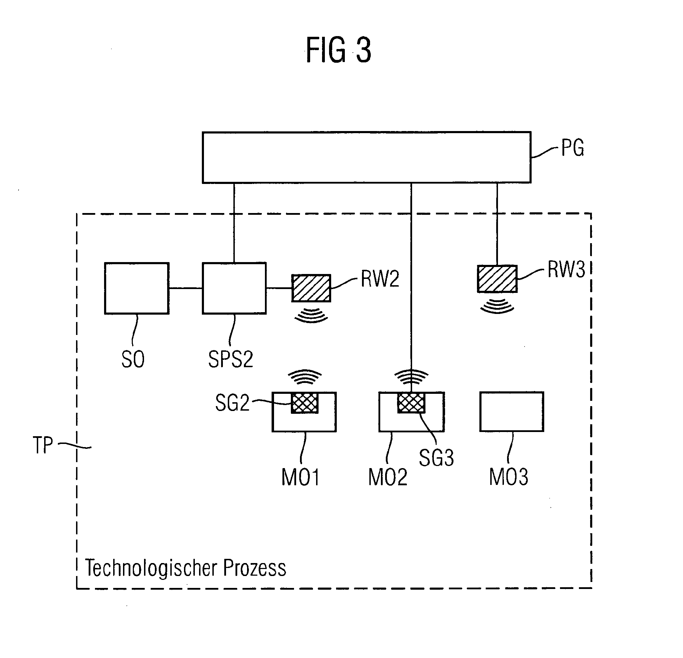

Ein weiterer Vorteil liegt darin, dass zum Erstellen der Anwenderprogramme für das Steuergerät SG1 die gleiche Entwicklungsumgebung PG (Figur 3) wie zur Programmierung einer speicherprogrammierbaren Steuerung verwendet werden kann. Das mobile Steuergerät SG1 besitzt die gleiche Laufzeitumgebung wie eine speicherprogrammierbare Steuerung SPS1 und ist somit in der Lage, Anwenderprogramme nach einer genormten SPS-Sprache auszuführen. Auch der Mikroprozessor des RFID-Transponders T2 besitzt eine Laufzeitumgebung zur Ausführung von Anwenderprogrammen, die in einer genormten SPS-Sprache erstellt wurden. Das heißt, das Anwenderprogramm wird auch auf dem Steuergerät SG1 zyklisch abgearbeitet und es passt sich an den Zyklus der speicherprogrammierbaren Steuerung SPS1 an. Die Zyklen der speicherprogrammierbaren Steuerung SPS1 und des mobilen Steuergeräts SG1 laufen somit synchron und besitzen somit exakt die gleiche Zykluszeit. Konkret bedeutet dies, dass wie bei einer speicher-programmierbaren Steuerung zuerst das Prozessabbild aller an das mobile Steuergerät SG1 angeschlossenen Eingänge SS2 aktualisiert wird, danach wird das Anwenderprogramm ausgeführt und schließlich das daraus resultierende Prozessabbild an die Ausgänge des Steuergerätes SG1 übertragen.

Das erfindungsgemäße Steuergerät SG1 bietet im Gegensatz zu "Stand alone"-RFID-Transpondern die Möglichkeit Aktoren und/oder Sensoren anzuschließen. Dies kann entweder über Funkverbindung oder eine fest Verdrahtung realisiert werden. Im Falle einer festen Verdrahtung müssen sich die Sensoren X1, X2 und Aktoren (oder Anzeigen) Y1 auf dem Träger des mobilen Steuergerätes SG1 befinden (im Falle einer elektrischen Steckverbindung zwischen einem mobilen Objekt M04 und dem Steuergerätes SG können sie auch auf dem mobilen Objekt M04 angebracht sein.

Über die Schnittstelle SS2 ist das mobile Steuergerät SG1 mit einem RFID-Leser verbindbar, eine solche Verbindung wird üblicherweise über Funk realisiert. Weiterhin ist das mobile Steuergerät SG1 über die Schnittstelle SS2 mit einem Computersystem und mit einer Datenbank verbindbar. Eine solche Verbindung kann über Kabel realisiert werden, zum Beispiel als USB-Verbindung, aber auch wireless (Funk, Infrarot, Bluetooth etc.).

Mit Hilfe der Befestigungsmittel BF kann das mobile Steuergerät SG1 an Objekten, insbesondere mobilen aber auch an stationären Objekten, in einem technologischen Prozess physikalisch permanent oder temporär angebracht werden, zum Beispiel durch Klebe-, Steck- oder Schraubverbindungen BV, die auch zum Zwecke der Spannungsversorgung oder für Sensoren oder Aktoren zusätzlich elektrisch ausgeführt sein kann. Ein mobiles Objekt in einem technologischen Prozess (zum Beispiel Gepäckstück, fahrerloses Transport-system, Container, kann somit mit einer dedizierten Intelligenz ausgestattet werden. Ein so ertüchtigtes mobiles Steuergerät SG1 repräsentiert ein mobiles Prozessobjekt, das auch nach den objektorientierten Paradigmen einem Objekt mit gekapseltem Zustand und Verhalten entspricht.

Die Sensoren X1, X2 können sich direkt am bzw. auf einem mobilen Steuergerät SG1 befinden. Der Sensor X1 kann z.B. zum Erkennen einer Verbindung BV, der Sensor X2 z.B. für die Bestimmung der Position des Steuergerätes SG1 verwendet werden. Bei der Verbindung BV handelt es sich um eine permanente oder temporäre mechanische oder mechanisch elektrische Verbindung zwischen dem Steuergerät SG1 und dem mobilen Objekt M04. Eine Verbindung BV wird über ein oder mehrere Befestigungsmittel BF hergestellt. Weiterhin können sich Aktoren Y1 und/oder Taster und/oder Anzeigen am mobilen Steuergerät SG1 befinden.

Das mobile Steuergerät SG1 kann somit temporär an einem mobilen Objekt in einem technologischen Prozess angebracht sein. Mit Hilfe eines speziellen Sensors X1 ist es möglich zu erkennen, ob sich ein mobiles Steuergerät SG1 physikalisch an einem mobilen Objekt (zum Beispiel Gepäckstück, Koffer etc.) befindet. Somit kann der aktuelle Zustand des Steuergerätes SG1 permanent erfasst werden. Über einen weiteren speziellen Sensor kann auch die Position des Steuergerätes/Objektes im Raum erfasst werden. Für das Anbringen und für das Entfernen des mobilen Steuergerätes an einem Objekt sind zwei spezielle Anwenderprogrammzyklen vorgesehen. Dadurch wird sichergestellt, dass sich beim Anbringen und beim Entfernen des Steuergeräts SG1 das Objekt als Prozessobjekt in einem definierten Zustand befindet. Das definierte Entfernen des mobilen Steuergeräts SG1 an mobilen Objekten ist sinnvoll, da die mobilen Objekte einem Verschleiß oder Umschlag unterliegen können oder in unendlicher Zahl im Prozess auftauchen können (z.B. Koffer) und die Steuergeräte SG1 entweder ausgetauscht oder an einem neuen Objekt befestigt werden können und müssen.

Figur 3 zeigt ein Ausführungsbeispiel für den Einsatz des erfindungsgemäßen Steuergeräts SG2 bis SG3 in einem technologischen Prozess. Die mobilen Steuergeräte SG2 bis SG3 sind an den mobilen Objekten MO1 bis MO2 angebracht, jeweils durch Schraub-, Steck- oder Klebeverbindung. Das Objekt M03 verfügt im Beispiel über kein eigenes Steuergerät. Die mobilen Objekte MO1 bis M03 (zum Beispiel Container oder Gepäckstücke) sind Bestandteil eines automatisierten technologischen Prozesses TP. Ein mobiles Steuergerät SG2 bis SG3 ist üblicherweise temporär mit einem mobilen Objekt MO1-MO3 verbunden. Zum Beispiel macht es bei der Gepäck-beförderung am Flughafen wenig Sinn, dass sich ein mobiles Steuergerät SG2 bis SG3 an einem Gepäckstück MO1-MO3 befindet, nachdem ein Reisender es entgegengenommen hat. Die Abbildung nach Figur 3 zeigt eine gemeinsame Programmier-umgebung PG zur Programmierung der konventionellen speicherprogrammierbaren Steuerung SPS2 und des Anwenderprogramms für die RFID-Lese-/Schreibeinheit RW3, sowie der über RFID-Lese-/Schreibeinheiten RW2 oder RW3, oder im Konfigurationsfall fest verbundenen Steuergeräte SG2 bis SG3. Auch die mit der speicherprogrammierbaren Steuerung SPS2 fest verbauten RFID-Lese-/Schreibeinheit RW2 kann durch das Programmiergerät PG programmiert werden. In Figur 3 ist die konventionelle und stationäre speicherprogrammierbare Steuerung SPS2 mit einem über Sensoren und Aktoren mit einem stationären Objekt SO (zum Beispiel Weiche eines Förderbandes) fest verbunden. Auch die RFID-Lese-/Schreibeinheit RW3 ist im technologischen Prozess TP für dessen Automatisierung üblicherweise festverbaut. Die mobilen Steuergeräte SG2 bis SG3 sind durch ihre Bauart klein, stromsparend, mobil und somit flexibel in einem technologischen Prozess TP einsetzbar, besonders an mobilen Objekten MO1 bis M03, wie zum Beispiel Container, fahrerlose Transportsysteme, Gepäckstücke. Die mobilen Steuergeräte SG2 bis SG3 besitzen eine Intelligenz und repräsentieren somit mobile Prozessobjekte. Durch die Programmierung aus einem einzigen Programmiergerät ist die Intelligenz von SG2 bis SG3 abgestimmt mit der Intelligenz von SPS2. Die Intelligenz der Steuergeräte SG2 bis SG3 umfasst auch eine Speichereinheit (Memory), die zum Beispiel die nächsten Wegschritte oder Information über den Bearbeitungszustand des repräsentierten mobilen Objekts etc. beinhalten kann.

Zur Durchführung, das heißt zur Automatisierung des technologischen Prozesses TP sind verschiedene Bearbeitungs- oder Behandlungsschritte notwendig, bei deren Automatisierung eine Vielzahl von Komponenten eingesetzt werden, wie zum Beispiel Antriebe, speicherprogrammierbare Steuerungen, Sensoren, RFID-Transponder, RFID-Leser usw. Durch das Bundling und die Vereinigung von speicherprogrammierbaren Steuerungen beziehungsweise der Funktionalität von speicherprogrammierbaren Steuerungen mit RFID-Transpondern in einem gemeinsamen mobilen Steuergerät SG1 bis SG3 ergeben sich für die Automatisierung technologischer Prozesse TP viele Vorteile. So kann durch eine gemeinsame Entwicklungsumgebung PG ein gemeinsame und aufeinander abgestimmte Konfiguration mit Anwenderprogramm für das Steuergerät SG2 bis SG3 und SPS2 aber auch z.B. für im Prozess enthaltene Antriebe erstellt werden, das vom Mikroprozessor des RFID-Transponders und von einer SPS ausgeführt werden kann. Des Weiteren können aus softwaretechnischer Sicht ansonsten informationstechnisch passive mobile Objekte MO1 bis MO3 (wie zum Beispiel ein Gepäckstück) durch das physikalische Anbringen eines Steuergerätes SG1 bis SG4 sehr einfach und elegant mit Intelligenz versehen werden und diese mobilen Objekte MO1 bis MO3 können reale Prozessobjekte repräsentieren. Die Intelligenz kann dabei in Form einer endlichen Anzahl von Geräten für eine unendliche Anzahl von mobilen Objekten weiterverwendet werden.

Mobiles programmierbares Steuergerät, welches funktional die klassischen Aufgaben einer speicherprogrammierbaren Steuerung (SPS) und eines aktiven RFID-Transponders (Tags) in sich vereinigt, bzw. das eine speicherprogrammierbare Steuerung (SPS) und einen aktiven RFID-Transponder hardware- und softwaremäßig integriert. Das Anwenderprogramm für das Steuergerät, d.h. inklusive SPS und RFID-Tag, kann mit einer Programmierumgebung nach IEC 61131 (KOP, FUP, AWL, Strukturierter Text, etc.) erstellt werden. Der Mikrocontroller des RFID-Tags benötigt dazu eine entsprechende Laufzeitumgebung. Die Anwenderprogramme im Steuergerät können somit zyklisch und synchron zur SPS ausgeführt werden. Das Steuergerät kann aufgrund seiner kleinen und kompakten Bauweise physikalisch an mobile Objekte eines technologischen Prozesses zu dessen Automatisierung, Steuerung oder Verfolgung/Dokumentation befestigt werden. Dadurch ist es möglich, dass diese mobilen Objekte auch pysikalisch und informationstechnisch Prozessobjekte im technologischen Prozess repräsentieren.

### Bezugszeichen

- T1, T2: RFID-Transponder
- P1, P2: Prozessor
- S1, S2: Speicher
- SE1, SE2: Sende-/Empfangseinheit
- B1, B2: Stromversorgung
- SS1, SS2: Schnittstelle
- U1, U2: Uhr
- RW1-RW3: RFID-Lese-/Schreibeinheit
- C: Computer
- DB: Datenbank
- V1, V2: Verbindung
- SG1-SG3: Steuergerät
- SPS1, SPS2: Speicherprogrammierbare Steuerung
- BF: Befestigungsmittel
- PG: Programmiergerät
- SO: Stationäres Objekt
- MO1-MO4: Mobiles Objekt
- TP: Technischer Prozess
- X1, X2: Sensor
- BV: Verbindung zwischen Steuergerät und mobilem Objekt
- Y1: Aktor

## Patentansprüche

1. Mobiles programmierbares Steuergerät (SG1-SG3), umfassend eine speicherprogrammierte Steuerung (SPS1) und ein RFID-Transponder (T2) zum Empfangen und Aussenden von Funksignalen, weiter umfassend:
eine Spannungsversorgung;
eine Schnittstelle (SS2) zur Ein- und/oder Ausgabe von Daten;
Mittel zum Laden eines Anwenderprogrammes von einem Programmiergerät (PG) oder einem Engineeringsystem;
wobei die speicherprogrammierte Steuerung (SPS1) einen Prozessor, ein Betriebssystem und ein Laufzeitsystem zur Ausführung des Anwenderprogramms umfasst;
**dadurch gekennzeichnet, dass** der RFID-Transponder (T2) mit dem Prozessor, dem Betriebssystem und dem Laufzeitsystem zur Ausführung des Anwenderprogrammes operativ verbunden ist, wobei das Anwenderprogramm Anweisungen zur Abarbeitung von Funktionen auf der speicherprogrammierbaren Steuerung (SPS1,) und gleichzeitig Anweisungen zur Abarbeitung von Funktionen auf dem Microprozessor des RFID-Transponders (T2) enthält.

2. Steuergerät (SG1-SG3) nach Anspruch 1,
**dadurch gekennzeichnet, dass** das Steuergerät (SGI-SG3) geeignet ist, Anwenderprograznme zu laden und auszuführen, die mit einer Entwicklungsumgebung erstellt wurden, die für die Progammierung von speicherprogrammierbaren Steuerungen (SPS1,) geeignet ist.

3. Steuergerät (SG1-SG3) nach Anspruch 1 oder 2,
**dadurch gekennzeichnet, dass** die Schnittstelle (SS2) zur Ein- und/oder Ausgabe von Daten mit Sensoren und/oder Aktoren und/oder Tasten und/oder LEDs und/oder einem Display zur Kommunikation mit dem technologischen Prozess (TP) oder mit einer darin arbeitenden Betriebsperson verbunden ist und dieser technologische Prozess (TP) durch die Ein- und/oder Ausgabe der Daten wahrgenommen und/oder gesteuert wird.

4. Steuergerät (SG1-SG3) nach einem der vorigen Ansprüche,
**dadurch gekennzeichnet, dass** dass der RFID-Transponder (T1, T2) über die Schnittstelle zur Ein- und/oder Ausgabe von Daten mit Sensoren und/oder Aktoren und/oder Tasten und/oder LEDs und/oder Displays eines technologischen Prozesses (TP) und/oder seinen Operatoren operativ verbunden ist.

5. Steuergerät (SG1-SG3) nach einem der vorigen Ansprüche,
**dadurch gekennzeichnet, dass** das Anwenderprogramm zyklisch abgearbeitet wird.

6. Steuergerät (SG1-SG3) nach einem der vorigen Ansprüche,
**dadurch gekennzeichnet, dass** das Anwenderprogramm mit einer Entwicklungsumgebung erstellt wird, die für die Programmierung und/oder Konfiguration von speicherprogrammierbaren Steuerungen (SPS1,SPS2) geeignet ist.

7. Steuergerät (SG1-SG3) nach einem der vorigen Ansprüche,
**dadurch gekennzeichnet, dass** der RFID-Transponder über eine Ein-/Ausgabeeinheit der speicherprogrammierbaren Steuerung (SPS1,) mit Sensoren und/oder Aktoren des technologischen Prozesses (TP) operativ kuppelbar ist.

8. Steuergerät (SG1-SG3) nach einem der vorigen Ansprüche,
**dadurch gekennzeichnet, dass** das Steuergerät an einem mobilen Objekt (MO1-MO2) befestigbar ist, und dass das mobile Objekt dadurch ertüchtigt ist, im Sinne des objektorientierten Paradigmas als aktives Objekt (MO1-MO3) zu wirken.

9. Steuergerät (SG1-SG3) nach einem der vorigen Ansprüche,
**dadurch gekennzeichnet, dass** für das Verbinden des Steuergerätes (SG1-SG3) mit einem Objekt (MO1-MO3) und für das Trennen des Steuergerätes (SG1-SG3) mit dem Objekt (MO1-MO3) jeweils dedizierte Anwenderprogrammzyklen vorhanden sind.

10. Programmiergerät (PG) für ein Steuergerät (SG1-SG3) nach einem der vorigen Ansprüche, das Programmiergerät umfassend:
Eingabemittel zur Eingabe von Benutzerbefehlen für Anwenderprogramme für das Steuergerät;
Ausgabemittel zur Darstellung editierter Anwenderprogramme und von Prozessdaten einzelner oder verschalteter Steuergeräte;
einer auf einem Prozessor des Programmiergerätes (PG) ablaufenden Programmiersoftware zum Umsetzen der eingegebenen Benutzerbefehle zum Erstellen der Anwenderprogramme,
**dadurch gekennzeichnet, dass** das erstellte Anwenderprogramm gleichzeitig Anweisungen zur Abarbeitung von Funktionen auf der speicherprogrammierbaren Steuerung (SPS1) und zur Abarbeitung von Funktionen auf dem Mikroprozessor (P1) des RFID-Transponders (T2) enthält.

11. Programmiergerät (PG) nach Anspruch 10,
**dadurch gekennzeichnet, dass** die Anwenderprogramme in einer genormten Sprache, insbesondere nach IEC 61131, für speicherprogrammierte Steuerungen (SPS1,) erstellt sind.

12. Programmiergerät (PG) nach einem der Ansprüche 10 bis 11,
**dadurch gekennzeichnet, dass** die Anwenderprogramme als Kontaktplan, als Funktionsplan, als Anweisungsliste, als Ablaufsprache, als strukturierter Text oder als Continuous Function Chart realisierbar sind.

13. System, umfassend ein mobiles Steuergerät (SG1-SG3) nach einem der Ansprüche 1 bis 9, und einen Sensor (X1) zur Bestimmung, ob das Steuergerät (SG1-SG3) sich an einem Objekt (MO1-MO4) befindet.

## Claims

1. Mobile programmable control device (SG1-SG3), comprising a programmable logic controller (SPS1) and an RFID transponder (T2) for receiving and transmitting radio signals, further comprising:
a voltage supply;
a data input and/or output interface (SS2);
means for loading an application program from a programming device (PG) or an engineering system;
wherein the programmable logic controller (SPS1) comprises a processor, an operating system and a runtime system for the purpose of executing the application program;
**characterised in that** the RFID transponder (T2) is operatively connected to the processor, the operating system and the runtime system for the purpose of executing the application program, the application program containing instructions for processing functions on the programmable logic controller (SPS1,) and at the same time instructions for processing functions on the microprocessor of the RFID transponder (T2).

2. Control device (SG1-SG3) according to claim 1,
**characterised in that**
the control device (SG1-SG3) is suitable for loading and executing application programs produced using a development environment that is suitable for programming programmable logic controllers (SPS1,).

3. Control device (SG1-SG3) according to claim 1 or 2,
**characterised in that**
the data input and/or output interface (SS2) is connected to sensors and/or actuators and/or keys and/or LEDs and/or a display for the purpose of communicating with the technological process (TP) or with an operator working therein and said technological process (TP) is managed and/or controlled by means of the input and/or output of the data.

4. Control device (SG1-SG3) according to one of the preceding claims,
**characterised in that**
the RFID transponder (Tl, T2) is operatively connected via the data input and/or output interface to sensors and/or actuators and/or keys and/or LEDs and/or displays of a technological process (TP) and/or its operators.

5. Control device (SG1-SG3) according to one of the preceding claims,
**characterised in that**
the application program is processed cyclically.

6. Control device (SG1-SG3) according to one of the preceding claims,
**characterised in that**
the application program is produced using a development environment that is suitable for the programming and/or configuration of programmable logic controllers (SPS1,SPS2).

7. Control device (SG1-SG3) according to one of the preceding claims,
**characterised in that**
the RFID transponder can be operatively coupled to sensors and/or actuators of the technological process (TP) via an input/output unit of the programmable logic controller (SPS1,).

8. Control device (SG1-SG3) according to one of the preceding claims,
**characterised in that**
the control device can be fixed to a mobile object (MO1-MO2), and that the mobile object is thereby trained to act as an active object (MO1-MO3) within the meaning of the object-oriented paradigm.

9. Control device (SG1-SG3) according to one of the preceding claims,
**characterised in that**
dedicated application program cycles are provided in each case for connecting the control device (SG1-SG3) to an object (MO1-M03) and for separating the control device (SG1-SG3) from the object (MO1-MO3).

10. Programming device (PG) for a control device (SG1-SG3) according to one of the preceding claims, the programming device comprising:
input means for inputting user commands for application programs for the control device;
output means for representing edited application programs and process data of individual or interconnected control devices; programming software executing on a processor of the programming device (PG) for the purpose of converting the input user commands in order to produce the application programs,
**characterised in that**
the produced application program simultaneously includes instructions for processing functions on the programmable logic controller (SPS1) and for processing functions on the microprocessor (P1) of the RFID transponder (T2).

11. Programming device (PG) according to claim 10,
**characterised in that**
the application programs are written in a standardised language, in particular a language conforming to IEC 61131, for programmable logic controllers (SPS1).

12. Programming device (PG) according to one of claims 10 to 11,
**characterised in that**
the application programs can be implemented as a ladder diagram, as a function block diagram, as an instruction list, as a runtime language, as structured text or as a sequential function chart.

13. System comprising a mobile control device (SG1-SG3) according to one of claims 1 to 9, and a sensor (X1) for determining whether the control device (SG1-SG3) is located on an object (MO1-MO4).

## Revendications

1. Appareil de commande programmable mobile (SG1-SG3), comprenant une commande à mémoire programmable (SPS1) et un transpondeur RFID (T2) pour recevoir et émettre des signaux radio, et comprenant en outre :
- une alimentation en tension ;
- une interface (SS2) pour la saisie et/ou la production de données en sortie ;
- des moyens pour le chargement d'un programme d'utilisateur à partir d'un appareil de programmation (PG) ou d'un système d'ingénierie ;
la commande à mémoire programmable (SPS1) comprenant un processeur, un système d'exploitation et un système de durée d'exécution pour l'exécution du programme d'utilisateur ;
**caractérisé en ce que** le transpondeur RFID (T2) est en connexion opérationnelle avec le processeur, le système d'exploitation et le système de durée d'exécution pour l'exécution du programme d'utilisateur, le programme d'utilisateur contenant des instructions pour le traitement de fonctions sur la commande à mémoire programmable (SPS1,) et, en même temps, des instructions pour le traitement de fonctions sur le microprocesseur du transpondeur RFID (T2).

2. Appareil de commande (SG1-SG3) selon la revendication 1, **caractérisé en ce que** l'appareil de commande (SG1-SG3) est adapté pour charger et exécuter des programmes d'utilisateur qui ont été créés avec un environnement de développement adapté pour la programmation de commandes à mémoire programmable (SPS1,).

3. Appareil de commande (SG1-SG3) selon la revendication 1 ou 2, **caractérisé en ce que** l'interface (SS2) pour la saisie et/ou la production de données en sortie est reliée à des capteurs et/ou à des actionneurs et/ou à des touches et/ou à des DEL et/ou à un affichage pour la communication avec le processus technologique (TP) ou avec un opérateur qui y travaille et **en ce que** ce processus technologique (TP) est pris en charge et/ou est commandé par la saisie et/ou la production des données en sortie.

4. Appareil de commande (SG1-SG3) selon l'une des revendications précédentes, **caractérisé en ce que** le transpondeur RFID (Tl, T2) est en connexion opérationnelle, via l'interface pour la saisie et/ou la production de données en sortie, avec des capteurs et/ou des actionneurs et/ou des touches et/ou des DEL et/ou des affichages d'un processus technologique (TP) et/ou ses opérateurs.

5. Appareil de commande (SG1-SG3) selon l'une des revendications précédentes, **caractérisé en ce que** le programme d'utilisateur est traité cycliquement.

6. Appareil de commande (SG1-SG3) selon l'une des revendications précédentes, **caractérisé en ce que** le programme d'utilisateur est créé avec un environnement de développement qui est adapté pour la programmation et/ou la configuration de commandes à mémoire programmable (SPS1, SPS2).

7. Appareil de commande (SG1-SG3) selon l'une des revendications précédentes, **caractérisé en ce que** le transpondeur RFID peut être mis en couplage opérationnel, via une unité de saisie / de production en sortie de la commande à mémoire programmable (SPS1,), avec des capteurs et/ou des actionneurs du processus technologique (TP).

8. Appareil de commande (SG1-SG3) selon l'une des revendications précédentes, **caractérisé en ce que** l'appareil de commande peut être fixé à un objet mobile (MO1-MO2) et **en ce que** l'objet mobile est ainsi rendu apte à agir en tant qu'objet actif (MO1-MO3) au sens du paradigme orienté objet.

9. Appareil de commande (SG1-SG3) selon l'une des revendications précédentes, **caractérisé par** la présence de cycles de programme d'utilisateur respectivement dédiés pour relier l'appareil de commande (SG1-SG3) à un objet(MO1-MO3) et pour séparer l'appareil de commande (SG1-SG3) de l'objet (MO1-MO3).

10. Appareil de programmation (PG) pour un appareil de commande (SG1-SG3) selon l'une des revendications précédentes, l'appareil de programmation comprenant :
- des moyens de saisie pour la saisie d'ordres d'utilisateur pour des programmes d'utilisateur pour l'appareil de commande ;
- des moyens de production en sortie pour la représentation de programmes d'utilisateur édités et de données de processus d'appareils de commande individuels ou interconnectés ;
- un logiciel de programmation qui tourne sur un processeur de l'appareil de programmation (PG) pour la conversion des ordres d'utilisateur saisis pour créer les programmes d'utilisateur ;
**caractérisé en ce que** le programme d'utilisateur créé contient en même temps des instructions pour le traitement de fonctions sur la commande à mémoire programmable (SPS1) et pour le traitement de fonctions sur le microprocesseur (P1) du transpondeur RFID (T2).

11. Appareil de programmation (PG) selon la revendication 10, **caractérisé en ce que** les programmes d'utilisateur sont créés dans un langage normalisé, en particulier selon IEC 61131, pour commandes à mémoire programmable (SPS1,).

12. Appareil de programmation (PG) selon l'une des revendications 10 à 11, **caractérisé en ce que** les programmes d'utilisateur peuvent être réalisés en tant que plan de contact, en tant que plan de fonction, en tant que liste d'instructions, en tant que langage de déroulement, en tant que texte structuré ou en tant que graphique de fonction continue.

13. Système, comprenant un appareil de commande mobile (SG1-SG3) selon l'une des revendications 1 à 9 et un capteur (X1) pour établir si l'appareil de commande (SG1-SG3) se trouve au niveau d'un objet (MO1-MO4).
